# FASCICULE DE BREVET EUROPEEN

(11) **EP 2 399 820 B1**
(45) Date de publication et mention de la délivrance du brevet: **16.10.2013**
(21) Numéro de dépôt: 11171004.2
(22) Date de dépôt: 22.06.2011
(51) Int. Cl.: B64C 1/06, B64C 1/40, B64C 1/14

(54) **Dispositif de fixation de systèmes pour aéronef, destiné à être notamment utilisé au niveau d'un hublot**
Vorrichtung zum Fixieren von Luftfahrzeugssystemen, insbesondere zum Einsatz an einem Bullauge
Device for attaching aircraft systems, in particular intended for use about a window

(30) Priorité: 22.06.2010 FR 1002609
(43) Date de publication de la demande: 28.12.2011
(73) Titulaire: Airbus Operations, 31060 Toulouse (FR)
(72) Inventeur: Sabadie, Lionel, 31200 Toulouse (FR); Durand, Romain, 31840 Ausonne (FR); Tomasi, Marc, 31100 Toulouse (FR); Briois, Jean Claude, 31830 Plaisance du Touch (FR)
(74) Mandataire: Santarelli

(56) Documents cités:
- FR-A1- 2 912 804
- US-A- 5 730 399
- US-A1- 2005 082 431
- US-A1- 2008 265 112

## Description

La présente invention concerne une structure d'aéronef et un dispositif de fixation de systèmes au niveau d'un hublot. Un exemple de l'art antérieur est fourni par le document US 2005/0082431 A1.

Ainsi, la présente invention concerne le domaine aéronautique et plus particulièrement la construction d'aéronefs.

De manière habituelle, un fuselage d'aéronef présente une ossature formée de cadres et de lisses. L'enveloppe extérieure du fuselage est fixée sur les cadres et les lisses. Lorsque l'aéronef est destiné à voler à haute altitude, compte tenu des températures extérieures auxquelles il doit être soumis, il est nécessaire de réaliser une isolation thermique du fuselage. Il est alors connu de recouvrir la face intérieure de la peau formant l'enveloppe du fuselage de matelas isolant se présentant sous la forme de lés ou de panneaux souples. Ces matelas sont appelés matelas de peau (en anglais : "field blanket"). Il convient également d'isoler thermiquement chaque cadre. On utilise alors des matelas présentant une structure similaire à celle des matelas de peau mais dont la forme est adaptée pour venir enrober les cadres à l'intérieur du fuselage. Ces matelas sont appelés par la suite matelas de cadre (en anglais : "frame blanket").

Les cadres du fuselage servent également de supports de fixation pour divers systèmes. On entend ici par système des équipements de l'aéronef ainsi que les câblages électriques, les réseaux hydrauliques, les réseaux pneumatiques, les conduits d'air pour la ventilation et la pressurisation à l'intérieur du fuselage ....

Les cadres du fuselage sont alors percés de trous d'une part pour permettre la fixation des matelas isolants et d'autre part pour permettre le supportage et la fixation des systèmes. Ces trous fragilisent les cadres et doivent parfois être compensés par des renforts structuraux ce qui complique donc la conception de l'aéronef.

En outre, en ce qui concerne les matelas, il convient d'adapter leur forme aux divers dispositifs de fixation prévus. Des trous, des coupes, entailles, oeillets, .. doivent être prévus dans les matelas pour permettre le passage d'un dispositif de fixation, s'adapter à la structure du fuselage, .... Les trous et entailles réalisés dans les matelas dégradent leur performance d'isolation et sont sources de ponts thermiques (et acoustiques) et elles réduisent donc les performances des matelas.

Il convient donc de limiter à la fois le nombre de trous réalisés dans la structure de l'aéronef (cadre et/ou autre pièce structurelle) ainsi que dans les matelas isolants (matelas de peau et matelas de cadre).

Le document FR-2 933 376 montre ainsi par exemple un dispositif de fixation de matelas isolant et un procédé de pose de matelas isolant dans un fuselage d'aéronef permettant de limiter le nombre de trous à réaliser dans les cadres de l'aéronef. Le dispositif décrit dans ce document comprend une portion formant crochet adaptée pour venir coiffer une aile du cadre et pincer ce dernier seule ou en coopération avec un élément structurel de l'aéronef de façon à assurer la fixation du dispositif au cadre. Une forme de réalisation de ce dispositif comprend une première pince de matelas de cadre porté par une première membrure destinée à s'étendre du premier côté du cadre, une deuxième pince de matelas de cadre portée par une deuxième membrure destinée à s'étendre du second côté du cadre, une première pince de matelas de champ portée par la première membrure et une deuxième de matelas de champ portée par la deuxième membrure.

La présente invention a alors pour but de fournir un dispositif de fixation permettant d'une part la fixation de systèmes et d'autre part le maintien de matelas isolants en limitant à la fois les trous à réaliser dans la structure de l'aéronef (cadre, ... ) et d'autre part dans lesdits matelas isolants.

Avantageusement, la mise en oeuvre d'un tel dispositif sera facile et/ou d'un prix de revient limité et/ou d'une masse aussi réduit que possible.

À cet effet la présente invention propose une structure d'aéronef comprenant un dispositif de fixation de systèmes dans un aéronef, le dispositif comportant d'une part, une base annulaire dont la forme est adaptée à la forme d'un cadre de hublot d'aéronef et, d'autre part, des bras portés par la base annulaire, s'étendant à partir de celle-ci vers l'extérieur et portant des supports de systèmes. Ladite structure comprend aussi l'hublot.

De cette manière, en adaptant la base annulaire à un cadre de hublot (en anglais : "window frame"), le dispositif selon l'invention peut être monté sur un hublot qui vient alors servir de support structurel pour des supports de systèmes. La base annulaire peut venir s'emboîter au niveau du cadre de hublot et évite ainsi toute modification de la structure de l'aéronef. Pour s'adapter à la forme habituelle d'un cadre de hublot, cette base annulaire présente ainsi de préférence une forme globale ovale, l'ovale étant non pas dans un plan mais incurvé pour tenir compte de la courbure d'une paroi de cabine d'aéronef.

Dans une première forme de réalisation, du dispositif de fixation de systèmes selon l'invention, la base annulaire a une forme profilée présentant une section avec une première branche s'étendant légèrement inclinée par rapport à un axe de symétrie passant à l'intérieur de la base annulaire et définissant ainsi une surface sensiblement tronconique et une seconde branche s'étendant à partir de l'extrémité de la première branche correspondant à la plus grande circonférence de la surface sensiblement tronconique définie par la première branche et formant un rebord vers l'extérieur de la base annulaire, la première branche et la seconde branche formant entre elles un angle obtus. Une telle forme de réalisation, grâce à la forme tronconique permet un montage sur un cadre de hublot par effet de coin et donc sans avoir à modifier la structure du hublot, ni de l'aéronef.

Dans une telle forme de réalisation, on peut prévoir que les bras s'étendent dans un plan sensiblement parallèle au plan du rebord vers l'extérieur de la base annulaire.

Pour rendre le dispositif de fixation de systèmes selon la présente invention modulable, les bras viennent par exemple s'emboîter dans la base annulaire par un système de type tenon/mortaise. Il est alors possible de prévoir plusieurs types de bras, soit en fonction des systèmes à supporter, soit en fonction de l'environnement, et de choisir le bon bras lors du montage et de la mise en place du dispositif dans un aéronef.

Pour éviter tout risque de démontage accidentel, les bras comportent de préférence des moyens de verrouillage élastiques permettant de les fixer sur la base annulaire. De tels moyens présentent aussi l'avantage de pouvoir être démontables.

Pour avoir un dispositif modulable et adaptable, on peut par exemple prévoir que chaque bras comporte des alésages, et que des supports pour des conduites et/ou des câbles sont fixés sur au moins un bras, à chaque fois au niveau d'un alésage. Cette solution permet d'utiliser une très grande variété de supports différents et permet en outre de les monter dans de nombreuses configurations.

Pour participer au maintien de matelas isolants, appelés matelas de cadres, on peut envisager dans un dispositif selon la présente invention qu'au moins un bras présente à son extrémité libre une patte de maintien s'étendant perpendiculairement par rapport au bras.

Une variante de réalisation d'un dispositif selon la présente invention prévoit que la base annulaire est réalisée en deux parties présentant chacune la forme d'un demi-anneau, les deux parties présentant un système de liaison et de verrouillage permettant de les relier en formant la base annulaire.

Enfin, la présente invention concerne également un aéronef, caractérisé en ce qu'il comporte au moins une structure telle que décrite ci-dessus.

Des détails et avantages de la présente invention ressortiront mieux de la description qui suit, faite en référence aux dessins schématiques annexés sur lesquels :
La figure 1 représente un dispositif selon l'invention dans sa position montée, autour d'un hublot d'un aéronef,
La figure 2 est une vue en perspective du dispositif selon l'invention montré sur la figure 1,
La figure 3 est une vue en coupe selon la ligne de coupe III-III de la figure 1,
La figure 4 est une vue de détail à échelle agrandie de la figure 1 montrant un bras d'un dispositif selon l'invention,
Les figures 5 et 6 sont des vues de détail du dispositif montré en perspective sur la figure 2,
La figure 7 est une vue en perspective d'un bras d'un dispositif selon la présente invention, et
Les figures 8 et 9 montrent à titre d'exemples en perspective et à échelle agrandie des dispositifs de maintien pouvant être utilisés dans un dispositif selon la présente invention.

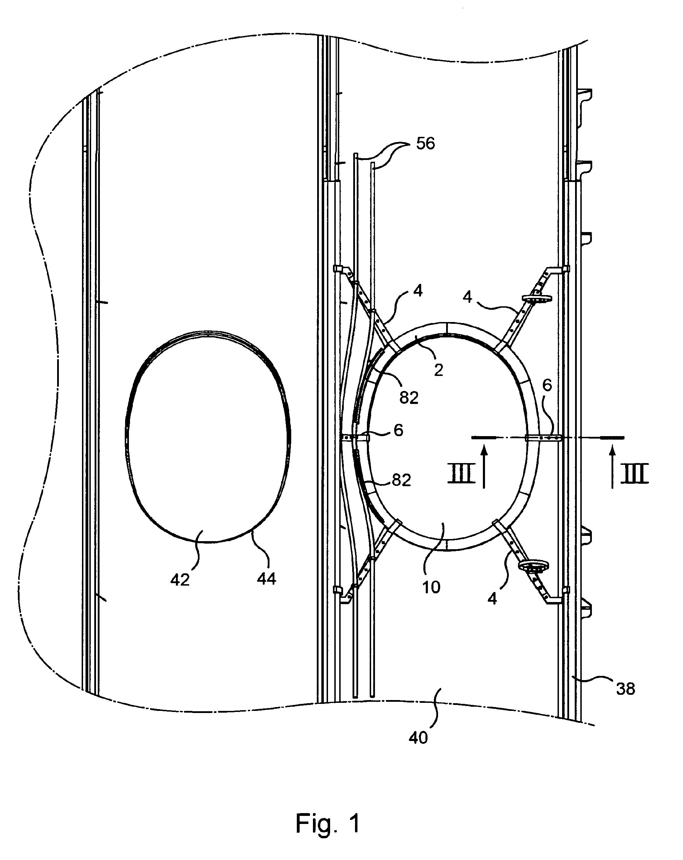

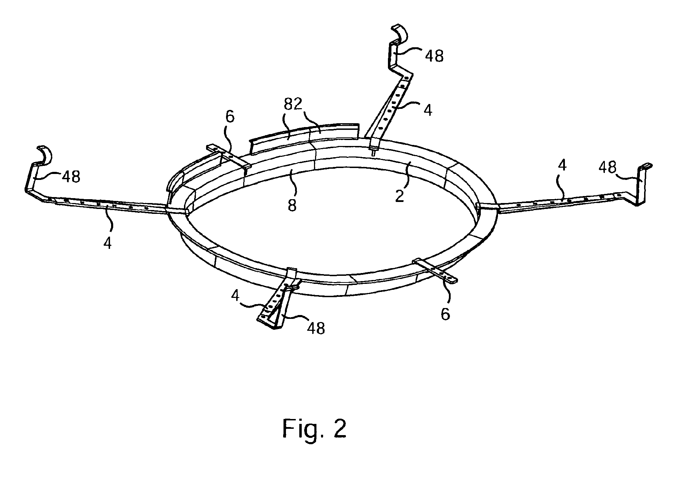

Le dispositif représenté sur les figures 1 et 2 comporte une base 2 annulaire à partir de laquelle s'étendent des bras 4, 6.

La base 2 annulaire est formée de deux parties 8 qui sont assemblées l'une à l'autre pour former la base 2 annulaire entière. La forme de la base 2 annulaire est adaptée à la forme d'un hublot 10 sur lequel elle est destinée à être montée. Ainsi, la base 2 dans l'exemple représenté sur les dessins présente une forme globale générale ovale. En outre, la base 2 est également incurvée pour s'adapter à la forme également incurvée du hublot 10. Toutefois, la courbure est relativement faible (rayon de courbure important) et donc en première approximation, on pourrait considérer que la base 2 est plane.

La base 2 annulaire présente une section transversale avec deux branches formant entre elles un angle obtus, par exemple compris entre 92° et 105°.

Une première branche 12 de la section transversale de la base 2 est légèrement inclinée par rapport à un axe perpendiculaire au plan de la figure 1. Cet axe peut être défini par exemple comme étant un axe de symétrie pour la base 2 annulaire, cet axe passant au centre de l'anneau défini par la base 2. Lorsque le dispositif est monté sur le hublot 10, l'axe considéré est perpendiculaire audit hublot. De la sorte, la première branche 12 de la base définit une surface sensiblement tronconique, qui présente donc une petite circonférence et une grande circonférence.

Une seconde branche 14 de la section transversale de la base 2 s'étend à partir de la grande circonférence définie au paragraphe précédent vers l'extérieur de la base 2. Cette seconde branche 14 définit ainsi un rebord qui est, à la courbure près, sensiblement perpendiculaire à l'axe de symétrie défini également au paragraphe précédent.

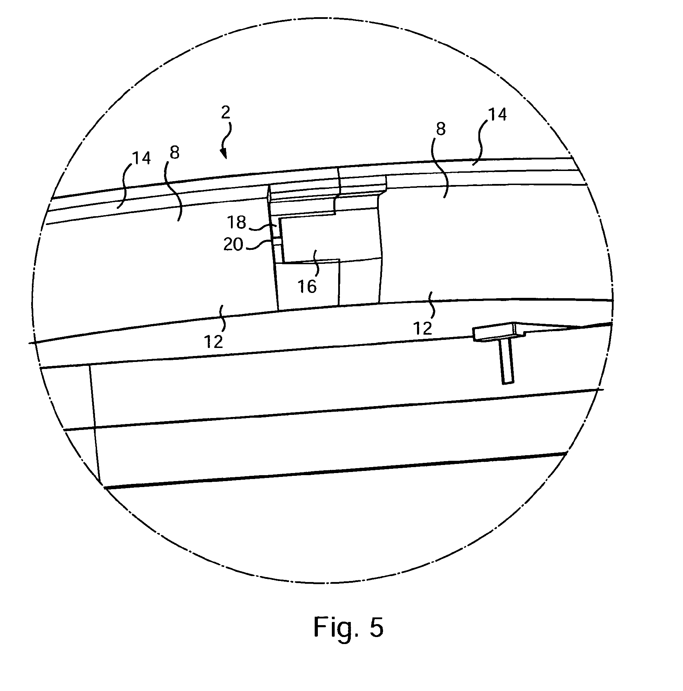

Comme indiqué plus haut, la base 2 annulaire est réalisée en deux parties 8 qui sont assemblées l'une à l'autre comme illustré sur la figure 5. Au niveau d'une jonction entre les deux parties 8, une première partie 8 porte à la périphérie extérieure de la zone sensiblement tronconique de la base 2, sous le rebord formé par la seconde branche 14, une languette 16 qui vient coopérer avec une rainure 18 formée dans l'autre partie 8 de la base 2. On peut par exemple prévoir des moyens de clipsage permettant à la languette 16 de venir se clipser dans la rainure 18. On remarque sur la figure 5 la présence d'une encoche 20 qui permet l'introduction de l'extrémité d'un tournevis sous la languette 16 de manière à permettre le "declipsage" de celle-ci.

On peut par exemple prévoir une extrémité d'une partie 8 de la base 2 porte une languette 16 et que son autre extrémité porte une rainure 18. Les deux parties 8 formant alors la base 2 annulaire peuvent être identiques.

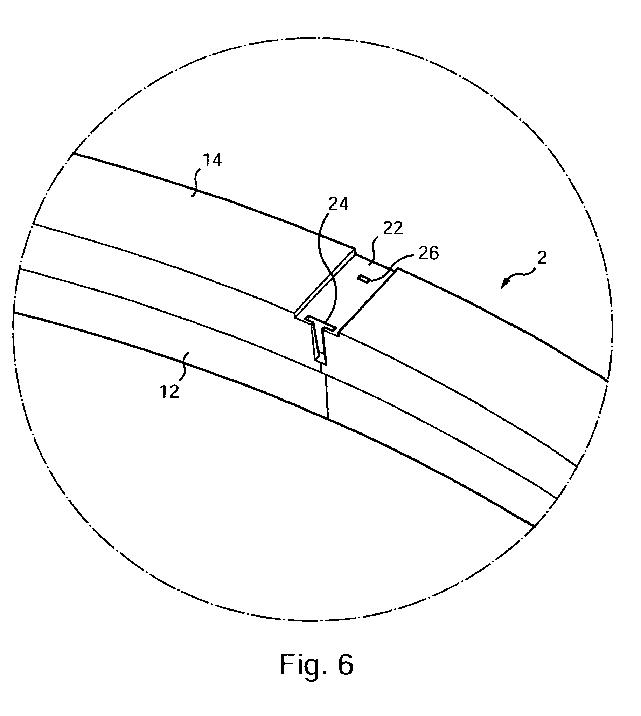

Comme on peut le voir sur la figure 2, le rebord formé par la seconde branche 14 porte les bras 4, 6. La figure 6 illustre les moyens sur la base 2 annulaire permettant de recevoir un bras 4, 6. Un logement rectangulaire 22 s'étendant sur le rebord formé par la seconde branche 14 s'étend radialement par rapport à la base 2 annulaire. Ce logement rectangulaire 22 s'étend sur toute la largeur de ce rebord. Du côté de l'intérieur de la base 2 annulaire, une rainure en T 24 est réalisée dans la partie sensiblement tronconique de la base 2 annulaire. On remarque également au niveau du logement rectangulaire 22, la présence d'une lumière 26 qui traverse entièrement le rebord formé par la seconde branche 14 de la base 2 annulaire.

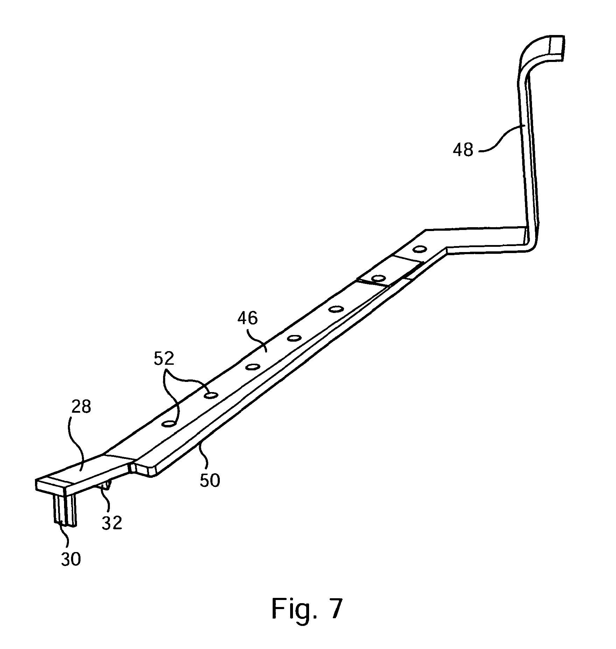

La figure 7 illustre un bras 4. À l'une de ces extrémités, ce bras 4 porte des moyens permettant sa fixation sur la base 2 annulaire. Ces moyens de fixation sont identiques aux moyens de fixation d'un bras 6 sur la base 2 annulaire.

Les moyens de fixation des bras 4 et 6 comportent une patte 28 de forme rectangulaire dont les dimensions correspondent à celles des logements rectangulaires 22 réalisés sur la base 2 annulaire. Une face de cette patte 28, appelée face inférieure, porte d'une part un doigt profilé 30 et d'autre part un doigt de clipsage 32. Le doigt profilé 30 s'étend sensiblement perpendiculairement à la patte 28. Il présente une section en T dont la forme et les dimensions sont adaptées à la rainure en T 24 réalisée dans la base 2 annulaire.

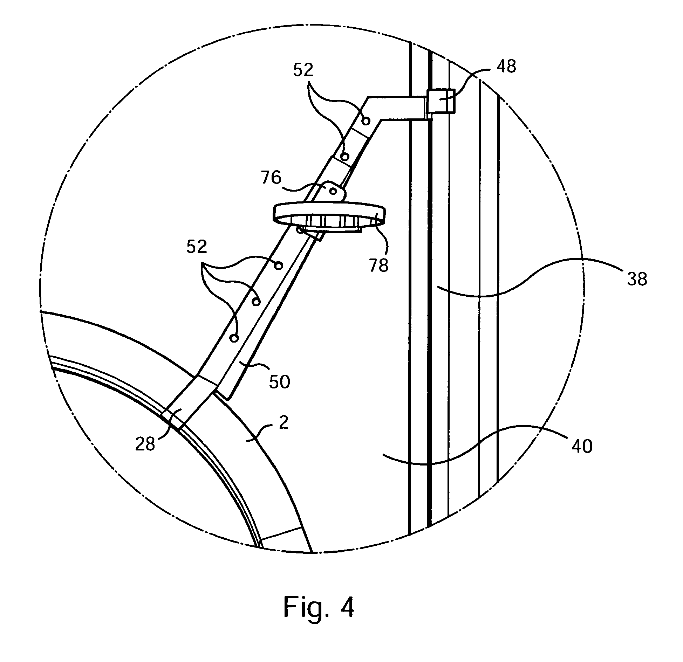

Le doigt de clipsage 32 présente la forme d'un harpon et est destiné à coopérer avec une lumière 26 réalisée dans le rebord défini par la seconde branche 14 de la base 2 annulaire. Les figures 1, 2 et 4 montrent comment un bras 4 et/ou 6 est monté sur la base 2 annulaire. Pour arriver à cette position montée, le doigt profilé 30 est introduit dans la rainure en T 24 correspondante. De la sorte, un guidage de la patte 28 correspondante et donc également du bras 4 ou 6 correspondant est réalisé pour le montage du bras sur la base 2 annulaire. En cours de montage, le doigt de clipsage 32 vient s'introduire dans la lumière 26 correspondante. Le doigt de clipsage 32 est dimensionné de telle sorte que lors de son introduction dans la lumière 26, l'extrémité libre du harpon est déformée élastiquement pour se rapprocher de la base du harpon. En outre, lorsque la patte 28 est dans sa position finale dans le logement rectangulaire 22 l'extrémité libre du harpon du doigt de clipsage 32 a entièrement traversé la lumière 26 et vient assurer le maintien du bras 4 ou 6.

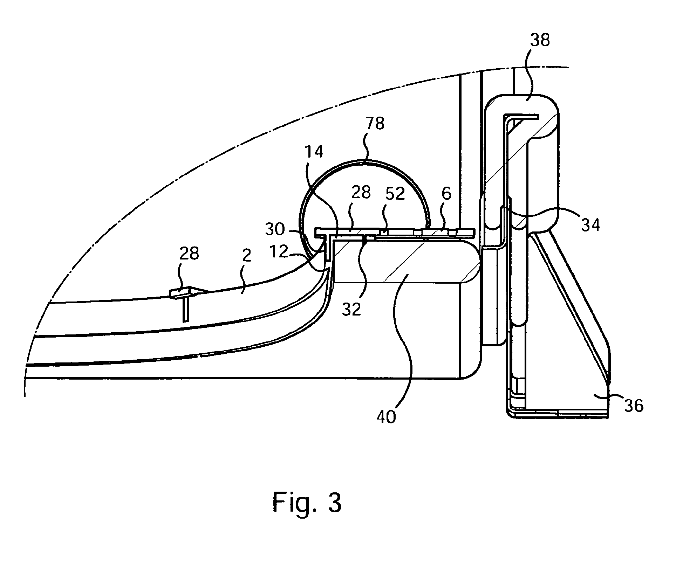

La figure 1 montre une portion d'un fuselage d'un aéronef. Ce fuselage comprend des cadres 34 (cf. figure 3) qui s'étendent transversalement par rapport au fuselage de l'aéronef. Une peau extérieure est fixée au cadre 34 par des pièces de liaison 36 également visibles sur la figure 3. La portion de fuselage représentée est recouverte par des matelas isolants. Deux types différents de matelas sont utilisés ici : des matelas de cadre 38 (en anglais : "frame blanket") et des matelas de peau 40 (en anglais : "field blanket"). Les matelas de peau 40 recouvrent la peau extérieure du fuselage tandis que les matelas de cadre 38 viennent recouvrir les cadres 34. La portion de fuselage représentée sur la figure 1 comporte également deux hublots 10.

Le dispositif de fixation de systèmes montré sur la figure 2 est destiné à venir prendre place sur un hublot 10 comme illustré sur la figure 1.

Le hublot 10 comporte de manière classique une vitre 42 montée dans un cadre de hublot 44. La forme et les dimensions de la base 2 annulaire sont adaptées pour permettre le montage de cette base 2 sur le cadre de hublot 44 du hublot. Grâce à la partie tronconique de la base 2 annulaire, la base 2, lors de son montage sur le cadre de hublot 44, vient se fixer sur ce dernier par effet de coin. Ici, la conicité de la partie tronconique de la base 2 annulaire est adaptée à la conicité du cadre de hublot 44 pour autoriser une excellente fixation de la base 2. Compte tenu de la forme ovale de cette base, on obtient automatiquement le bon positionnement de la base 2 annulaire par rapport au hublot 10.

Lorsque la base 2 annulaire est ainsi positionnée sur le hublot 10, les bras 4, 6 s'étendent sensiblement radialement à partir de cette base 2 vers l'extérieur de celle-ci. Les bras 4, 6 s'étendent à chaque fois sensiblement jusqu'à proximité d'un cadre 34. Comme il ressort clairement de la figure 1, deux bras sont relativement courts. Ces bras porteront ultérieurement la référence 6. Les autres bras sont plus longs et portent la référence 4.

La figure 3 est une vue en coupe selon la ligne de coupe III-III de la figure 1 et montre comment un bras 6 est monté sur la base 2 annulaire et montre également comment ce bras 6 participe au maintien du matelas de peau 40 correspondant.

Comme on peut le voir sur la figure 3, entre le hublot 10 et le cadre 34, le matelas de peau 40 est notamment maintenu d'une part par la base 2 annulaire et d'autre part par un bras 6 s'étendant à partir de cette base 2 annulaire en direction d'un cadre 34. Comme décrit plus haut, le bras 6 présente à l'une de ces extrémités une patte 28 qui coopère avec la base 2 annulaire par l'intermédiaire d'un doigt profilé 30 et d'un doigt de clipsage 32. Le montage de la base 2 annulaire décrit plus haut est réalisé alors que le matelas de peau 40 est déjà positionné. Le rebord correspondant à la seconde branche 14 de la base 2 annulaire vient alors recouvrir un bord du matelas de peau 40 correspondant à la découpe faite dans ce matelas au niveau du hublot 10 correspondant. De par sa présence, le bras 6 empêche le matelas de peau 40 de s'écarter de la peau extérieure du fuselage. Pour éviter un glissement du matelas de peau 40 par rapport à la peau extérieure, il peut être prévu d'avoir un système d'attache du type à boucles et crochets entre le matelas de peau 40 et le bras 6. Un tel système d'accrochage à boucles et crochets est plus connu sous la marque déposée Velcro.

Les bras 4 s'étendent également depuis le rebord de la base 2 annulaire en direction d'un cadre 34. Alors que les bras 6 s'étendent sensiblement perpendiculairement au cadre 34 correspondant, les bras 4 sont inclinés par rapport au cadre 34. Du fait de cette inclinaison, et du point du départ du bras 4 sur le rebord de la base 2 annulaire, le bras 4 est plus long que le bras 6 décrit plus haut. De même que pour les bras 6, chaque bras 4 présente à l'une de ces extrémités, du côté de la base 2 annulaire, une patte 28 munie d'un doigt profilé 30 et d'un doigt de clipsage 32 permettant sa fixation sur la base 2 annulaire. Chaque bras 4 présente également un corps 46 de forme globale parallélépipédique allongée. Les bras 6 présentent un corps 46 similaire mais de longueur moindre.

Par rapport aux bras 6, les bras 4 portent à leur extrémité opposée à la patte 28 une patte de maintien 48. Cette dernière vient participer au maintien du matelas de cadre 38 sur le cadre 34 correspondant. La patte de maintien 48 s'étend sensiblement perpendiculairement au corps 46 du bras 4. Ceci lui permet de maintenir le matelas de cadre 38 contre le cadre 34 correspondant. On remarque qu'il y a deux formes distinctes de pattes de maintien 48. En effet, pour s'adapter à la forme du cadre 34, la forme des pattes de maintien 48 est adaptée en fonction du fait qu'elle est destinée à venir d'un côté ou de l'autre du cadre 34.

De cette manière, les bras 4 participent donc au maintien des matelas de cadre 38. Les bras 4 participent de la même manière que les bras 6 également au maintien des matelas de peau 40. En effet, le corps 46 d'un bras 4 permet de même que le corps 46 d'un bras 6, de maintenir le matelas de peau 40 contre la peau extérieure du fuselage.

Pour éviter le glissement du matelas de peau 40 par rapport à la peau extérieure, le long de celle-ci, une attache 50 est également prévue. Cette attache 50 s'étend sur toute ou partie de la longueur du corps 46 du bras 4. Cette attache 50 constitue une partie d'un système de fixation à boucles et crochets plus connue sous le nom de la marque déposée Velcro. L'autre partie du système de fixation est solidarisée au matelas de peau 40.

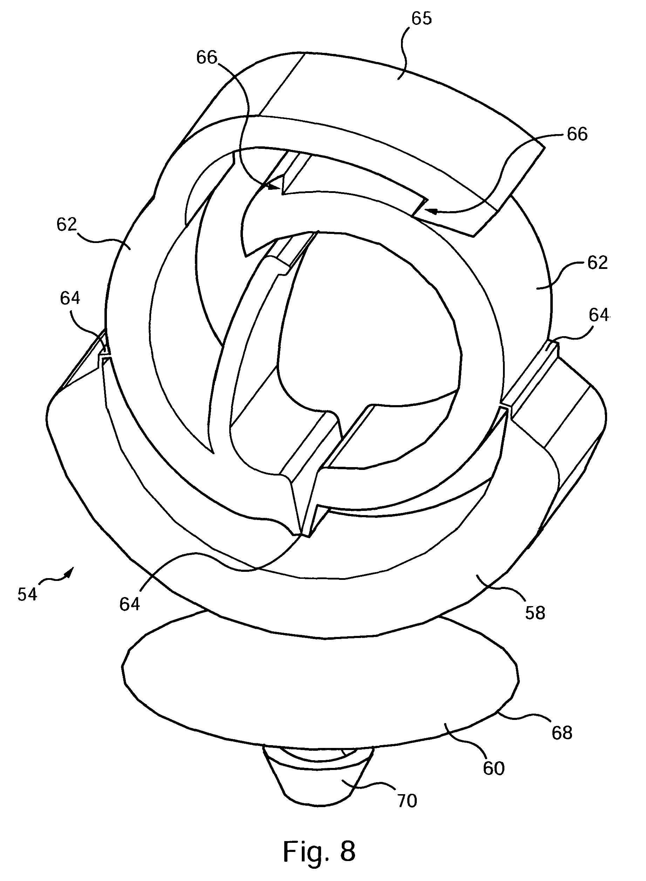

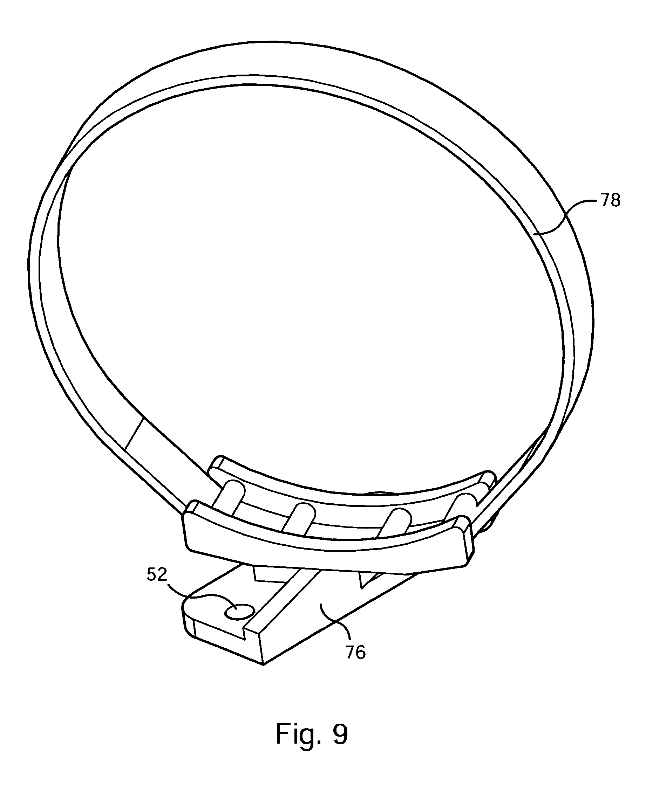

Comme on peut le remarquer sur les figures, des alésages 52 régulièrement espacés sont réalisés sur le corps 46 des bras 4 et 6. Ces alésages 52 sont prévus pour permettre la fixation de supports, tels les supports montrés plus en détails sur les figures 8 et 9.

La figure 8 montre un support 54 destiné à recevoir un câble électrique 56 (figure 1). Un tel support 54 comporte une base 58 surmontant un pied 60 et portant elle-même deux mâchoires 62.

La base 58 présente la forme d'une bande incurvée. Chacune de ses deux extrémités forme une charnière 64 sur laquelle est articulée une mâchoire 62 de manière à pouvoir pivoter par rapport à la base 58. Chacune des mâchoires 62 se présente elle aussi sous la forme globalement d'une bande incurvée. Les deux mâchoires 62 sont reliées entre elles par une troisième charnière 64.

Le support 54 est montré sur la figure 8 en position fermée. En position ouverte, les mâchoires 62 sont pivotées d'environ 90° vers l'extérieur par rapport à la position montrée sur cette figure 8 et forment ainsi un W. En venant appuyer un câble électrique 56 au centre de ce W, les mâchoires 62 se referment pour venir dans la position montrée sur la figure 8 et emprisonner le câble électrique 56. On remarque que grâce à la présence d'une languette extérieure 65 et un jeu de crochets 66, le support 54 est verrouillé en position fermée, interdisant tout retrait involontaire du câble électrique 56 hors du logement prévu dans le support 54.

Le pied 60 du support 54 comporte une platine 68 circulaire de laquelle s'étend, du côté opposé à la base 58, une tige présentant une tête tronconique 70. Cette dernière est réalisée dans une matière élastique telle du caoutchouc ou un matériau synthétique similaire et est telle que son sommet forme un cercle de diamètre inférieur au diamètre des alésages 52 et que sa base forme un cercle de diamètre supérieur au diamètre des alésages 52. De la sorte, la tête tronconique 70 peut être introduite à travers un alésage 52 mais une fois que la base de cette tête a traversé ledit alésage, il devient difficile de la retirer dans l'autre sens, la périphérie de la base de la tête tronconique venant reposer à plat autour de l'alésage 52 correspondant.

La figure 9 montre quant à elle un support 74 destiné à recevoir un conduit d'air (ou toute sorte de conduite destinée à la circulation d'un fluide). Un tel support 74 comporte une plaque d'appui 76 surmontée d'un collier 78.

La plaque d'appui 76 est une platine de forme sensiblement rectangulaire. Elle présente deux alésages 52 qui sont similaires aux alésages 52 réalisés dans les corps 46 des bras 4 et 6. L'espacement entre les deux alésages 52 de la plaque d'appui 76 correspond à l'espacement (qui est constant de préférence) entre deux alésages 52 voisins réalisés dans un corps 46 d'un bras 4 ou d'un bras 6. Grâce à ses alésages 52, la plaque d'appui 76 peut être fixée sur un bras 4 (éventuellement un bras 6 : comme les bras 6 sont de longueur réduite, ils sont plutôt utilisés pour supporter des câbles électriques qui sont d'encombrement moindre par rapport à des conduites d'air ou similaires). La fixation de la plaque d'appui 76, et donc du support 74, peut se faire par exemple à l'aide d'attaches à tête d'équerre (non représentées), appelées aussi par leur dénomination en anglais, c'est-à-dire "tie wrap". D'autres moyens de fixation peuvent également être envisagés ici, par exemple une goupille passant dans chacun des alésages 52 de la plaque d'appui 76 et dans un alésage 52 du bras 4 (ou 6) correspondant.

Le collier 78 est un collier adapté à la taille des conduites à supporter. Tout type de collier utilisé habituellement, par exemple dans l'aéronautique, pour le maintien de conduites d'air peut être utilisé ici. De tels colliers sont connus de l'homme du métier et ne seront pas décrits dans le détail ici.

Les supports 54 et 74 sont utilisés pour le supportage de câbles électriques et de conduits d'air. Ces câbles et conduites s'étendent généralement le long des cadres 34, ou sensiblement dans la même direction que les cadres 34. Sur la figure 1, seules deux câbles électriques 56 ont été représentés. Ces câbles sont relativement souples et peuvent donc facilement être déviés. Ainsi, à proximité du hublot 10, les câbles électriques 56 peuvent être rapprochés l'un de l'autre et/ou déviés pour s'adapter au passage plus étroit au niveau du hublot 10 entre celui-ci et les cadres 34.

Pour éviter que les câbles électriques 56 passant à proximité du hublot 10 viennent passer devant le hublot 10, des déflecteurs 82 peuvent être prévus. Ces derniers peuvent être intégrés à la base 2 annulaire ou bien venir s'emboîter sur la base 2 annulaire lorsque des câbles électriques 56 sont déviés à proximité.

Le dispositif décrit ci-dessus permet d'utiliser le châssis d'un hublot comme support structurel pour l'installation de systèmes, et plus particulièrement pour le support de câbles électriques et de conduits d'air. Comme décrit plus haut, ce dispositif permet également de participer au maintien des matelas isolants, matelas de cadre et matelas de peau. Le cadre de hublot a ainsi des fonctionnalités qu'il ne présentait pas dans l'état de la technique antérieure à la présente invention.

Si le dispositif de support et de maintien décrit plus haut est amené à être démonté, il est possible de le remonter exactement dans la même configuration qu'avant son démontage. Ainsi, en cas d'intervention sur un aéronef, il est possible de garantir que les systèmes seront remontés de manière à retrouver la même position qu'avant leur démontage.

Le dispositif selon l'invention, notamment tel que décrit ci-dessus, permet une grande modularité et une bonne adaptabilité. En effet, il permet d'une part de s'adapter à de nombreuses solutions pour le passage des systèmes supportés et d'autre part il permet de supporter tous types de systèmes car il suffit d'adapter les supports fixés sur les bras du dispositif pour pouvoir accueillir un autre système.

Le dispositif selon l'invention présente aussi le grand avantage de pouvoir réaliser le supportage de câbles et conduites sans avoir à percer ou modifier la structure de l'aéronef. De même, le maintien des matelas isolants ne nécessite pas d'adaptation de ceux-ci : aucune découpe, entaille, ou mise en place d'oeillet n'est à réaliser ici.

Le montage de ce dispositif selon l'invention peut également être réalisé sans outil, ou au moins sans aucun outil spécifique. De plus, un seul opérateur peut réaliser le montage d'un dispositif selon l'invention sur un hublot d'aéronef. En ce qui concerne son démontage, celui-ci peut lui aussi être facilement réalisé.

Enfin, la présente invention est facile et rapide à mettre en oeuvre. Le temps de montage est restreint. De plus, si le dispositif selon l'invention est réalisé en matière synthétique, il est possible d'avoir un dispositif de poids réduit, ce qui est bien sûr avantageux pour un aéronef.

La présente invention ne se limite pas à la forme de réalisation préférée représentée sur les dessins et décrite ci-dessus. Elle concerne également toutes les variantes de réalisation évoquées et celles à la portée de l'homme du métier dans le cadre des revendications ci-après.

Ainsi par exemple, le dispositif décrit et représenté comporte six bras autour d'une base annulaire. Le nombre de bras, leur mode de fixation sur la base, leur forme, celle de la base, pourraient être modifiés sans pour autant sortir du cadre de l'invention.

De même, il peut être envisagé qu'un dispositif selon la présente invention ne serve qu'au support de systèmes sans participer au maintien des matelas isolants.

Les types de supports utilisés pour les câbles électriques et pour les conduites d'air ont été donnés à titre d'exemples non limitatifs. D'autres supports, adaptés éventuellement à d'autres types de conduites, pourraient être utilisés dans un dispositif selon la présente invention.

## Revendications

1. Structure d'aéronef, comprenant au moins un dispositif de fixation de systèmes dans ledit aéronef, ledit dispositif de fixation comprenant
- une base (2) annulaire adaptée pour être montée sur ladite structure au moyen d'un support, et
- des bras (4, 6) portés par ladite base (2) annulaire, s'étendant à partir de celle-ci vers l'extérieur et portant des supports (54, 74) de systèmes,
ladite structure d'aéronef comprenant au moins un hublot (10) comportant un cadre (44) formant ledit support structurel pour ledit dispositif de fixation et ladite base (2) annulaire présentant une forme adaptée à son montage par emboîtement sur ledit cadre (44).

2. Structure d'aéronef selon la revendication 1, **caractérisé en ce que** la base (2) annulaire a une forme profilée présentant une section avec une première branche (12) s'étendant légèrement inclinée par rapport à un axe de symétrie passant à l'intérieur de la base (2) annulaire et définissant ainsi une surface sensiblement tronconique et une seconde branche (14) s'étendant à partir de l'extrémité de la première branche (12) correspondant à la plus grande circonférence de la surface sensiblement tronconique définie par la première branche (12) et formant un rebord vers l'extérieur de la base (2) annulaire, la première branche (12) et la seconde branche (14) formant entre elles un angle obtus.

3. Structure d'aéronef selon la revendication 2, **caractérisé en ce que** les bras (4, 6) s'étendent dans un plan sensiblement parallèle au plan du rebord vers l'extérieur de la base (2) annulaire.

4. Structure d'aéronef selon l'une des revendications 1 à 3, **caractérisé en ce que** les bras (4, 6) viennent s'emboîter dans la base (2) annulaire par un système de type tenon (30)/mortaise (24).

5. Structure d'aéronef selon l'une des revendications 1 à 4, **caractérisé en ce que** les bras (4, 6) comportent des moyens de verrouillage élastiques (32) permettant de les fixer sur la base (2) annulaire.

6. Structure d'aéronef selon l'une des revendications 1 à 5, **caractérisé en ce que** chaque bras (4, 6) comporte des alésages (52), et **en ce que** des supports (54, 74) pour des conduites et/ou des câbles (56) sont fixés sur au moins un bras (4, 6), à chaque fois au niveau d'un alésage (52).

7. Structure d'aéronef selon l'une des revendications 1 à 6, **caractérisé en ce qu'**au moins un bras (4) présente à son extrémité libre une patte de maintien (48) s'étendant perpendiculairement par rapport au bras (4).

8. Structure d'aéronef selon l'une des revendications 1 à 7, **caractérisé en ce que** la base (2) annulaire est réalisée en deux parties (8) présentant chacune la forme d'un demi-anneau, les deux parties (8) présentant un système de liaison et de verrouillage (16, 18) permettant de les relier en formant la base (2) annulaire.

9. Aéronef, **caractérisé en ce qu'**il comporte une structure selon l'une quelconque des revendications 1 à 8.

## Patentansprüche

1. Luftfahrzeugstruktur, umfassend zumindest eine Vorrichtung zum Befestigen von Einrichtungen in dem Luftfahrzeug, wobei die Befestigungsvorrichtung aufweist:
- eine ringförmige Basis (2), die dazu ausgelegt ist, über einen Träger an die Struktur montiert zu werden, und
- Arme (4, 6), die von der ringförmigen Basis (2) getragen werden, sich von dieser ausgehend nach außen erstrecken und Träger (54, 75) für die Einrichtungen abstützen,
wobei die Luftfahrzeugstruktur zumindest ein Fenster (10) mit einem Rahmen (44) aufweist, welcher den Strukturträger für die Befestigungsvorrichtung bildet, und die ringförmige Basis (2) eine Form aufweist, die für deren Montage durch Aufstecken auf den Rahmen (44) ausgelegt ist.

2. Luftfahrzeugstruktur nach Anspruch 1,
**dadurch gekennzeichnet, dass** die ringförmige Basis (2) eine profilierte Form hat, die einen Querschnitt mit einem ersten Schenkel (12) aufweist, der sich gegenüber einer Symmetrieachse leicht geneigt erstreckt, die durch das Innere der ringförmigen Basis (2) verläuft und somit eine im Wesentlichen kegelstumpfförmige Fläche definiert, und mit einem zweiten Schenkel (14), der sich von demjenigen Ende des ersten Schenkels (12) ausgehend erstreckt, das dem größten Umfang der im Wesentlichen kegelsumpfförmigen Fläche entspricht, die von dem ersten Schenkel (12) gebildet wird, und eine Randleiste nach außerhalb der ringförmigen Basis (2) bildet, wobei der erste Schenkel (12) und der zweite Schenkel (14) einen stumpfen Winkel miteinander einschließen.

3. Luftfahrzeugstruktur nach Anspruch 2,
**dadurch gekennzeichnet, dass** die Arme (4, 6) sich in einer Ebene im Wesentlichen parallel zur Ebene der Randleiste nach außerhalb der ringförmigen Basis (2) erstrecken.

4. Luftfahrzeugstruktur nach einem der Ansprüche 1 bis 3,
**dadurch gekennzeichnet, dass** die Arme (4, 6) über eine Einrichtung vom Typ mit Feder (3) und Nut (24) in die ringförmige Basis (2) eingreifen.

5. Luftfahrzeugstruktur nach einem der Ansprüche 1 bis 4,
dadurch gekenntzeichnet, dass die Arme (4, 6) elastische Verriegelungsmittel (32) aufweisen, über welche sie an die ringförmige Basis (2) befestigt werden können.

6. Luftfahrzeugstruktur nach einem der Ansprüche 1 bis 5,
**dadurch gekennzeichnet, dass** jeder Arm (4, 6) Bohrungen (52) aufweist und dass die Träger (54, 74) für Kanäle und/oder Kabel (56) an zumindest einem Arm (4, 6) jeweils im Bereich einer Bohrung (52) befestigt sind.

7. Luftfahrzeugstruktur nach einem der Ansprüche 1 bis 6,
**dadurch gekennzeichnet, dass** zumindest ein Arm (4) an seinem freien Ende eine Haltelasche (48) aufweist, die sich senkrecht zum Arm (4) erstreckt.

8. Luftfahrzeugstruktur nach einem der Ansprüche 1 bis 7,
**dadurch gekennzeichnet, dass** die ringförmige Basis (2) in zwei Teilen (8) ausgeführt ist, die jeweils die Form eines Halbrings haben, wobei die beiden Teile (8) eine Verbindungs- und Verriegelungseinrichtung (16, 18) aufweisen, über die sie verbunden werden können und dabei die Basis (2) bilden.

9. Luftfahrzeug,
**dadurch gekennzeichnet, dass** es eine Struktur nach einem der Ansprüche 1 bis 8 aufweist.

## Claims

1. Aircraft structure, comprising at least one fastening device for fastening systems in said aircraft, said fastening device comprising
- a ring-shaped base (2) adapted to be mounted on said structure by means of a support, and
- arms (4, 6) borne by said ring-shaped base (2), extending outward from the latter and bearing supports (54, 74) for systems,
said aircraft structure comprising at least one window (10) comprising a frame (44) forming said structural support for said fastening device and said ring-shaped base (2) having a form adapted for its mounting by interfitting on said frame (44).

2. Aircraft structure according to claim 1, **characterized in that** the ring-shaped base (2) has a sectional form having a section with a first branch (12) extending slightly slanting in relation to an axis of symmetry running inside the ring-shaped base (2) and in this way defining a substantially frusto-conical surface, and a second branch (14) extending from the end of the first branch (12) corresponding to the larger circumference of the substantially frusto-conical surface defined by the first branch (12) and forming a rim toward the outside of ring-shaped base (2), the first branch (12) and the second branch (14) forming an obtuse angle between them.

3. Aircraft structure according to claim 2, **characterized in that** the arms (4, 6) extend in a plane substantially parallel to the plane of the rim toward the outside of the ring-shaped base (2).

4. Aircraft structure according to one of claims 1 to 3, **characterized in that** the arms (4, 6) come to interfit in the ring-shaped base (2) by means of a mortise (24)-and-tenon (30) type system.

5. Aircraft structure according to one of claims 1 to 4, **characterized in that** the arms (4, 6) comprise elastic locking means (32) making it possible to fasten them onto the ring-shaped base (2).

6. Aircraft structure according to one of claims 1 to 5, **characterized in that** each arm (4, 6) comprises bores (52), and **in that** supports (54, 74) for ducts and/or cables (56) are fastened onto at least one arm (4, 6), at a bore (52) in each instance.

7. Aircraft structure according to one of claims 1 to 6, **characterized in that** at least one arm (4) has at its free end a holding tab (48) extending perpendicular in relation to the arm (4).

8. Aircraft structure according to one of claims 1 to 7, **characterized in that** the ring-shaped base (2) is made in two parts (8) each having the shape of a half ring, the two parts (8) having a connection and locking system (16, 18) making it possible to connect them by forming the ring-shaped base (2).

9. An aircraft, **characterized in that** it comprises a structure according to any one of claims 1 to 8.
